Europäisches Patentamt

European Patent Office

Office européen des brevets

(19)

(11) Veröffentlichungsnummer : **0 297 329 B1**

(12)

# EUROPÄISCHE PATENTSCHRIFT

(45) Veröffentlichungstag der Patentschrift :
**11.09.91 Patentblatt 91/37**

(51) Int. Cl.⁵ : **G01G 17/04**

(21) Anmeldenummer : **88109333.0**

(22) Anmeldetag : **11.06.88**

(54) Anordnung zur Übernahme, Massenbestimmung und -abgrenzung von Flüssigkeiten, insbesondere für Getränke wie Milch oder Bier.

Verbunden mit 88905754.3/0323497
(europäische
Anmeldenummer/Veröffentlichungsnummer)
durch Entscheidung vom 23.02.90.

(30) Priorität : **13.06.87 DE 3719775**

(43) Veröffentlichungstag der Anmeldung :
**04.01.89 Patentblatt 89/01**

(45) Bekanntmachung des Hinweises auf die
Patenterteilung :
**11.09.91 Patentblatt 91/37**

(84) Benannte Vertragsstaaten :
**AT BE CH DE ES FR GB GR IT LI LU NL SE**

(56) Entgegenhaltungen :
**EP-A- 0 235 386**
**WO-A-83/02874**
**DE-A- 3 228 714**
**DE-U- 8 535 376**
**US-A- 4 481 985**

(73) Patentinhaber : **OTTO TUCHENHAGEN GmbH**
**& Co. KG**
**Am Industriepark 2-10**
**W-2059 Büchen (DE)**

(72) Erfinder : **Mieth, Hans Otto, Dipl.-Ing.**
**Sandkrug 3**
**W-2058 Schnakenbek/Elbe (DE)**

(74) Vertreter : **Glaeser, Joachim, Dipl.-Ing. et al**
**Patentanwalt Königstrasse 28**
**W-2000 Hamburg 50 (DE)**

## Beschreibung

Die Erfindung betrifft eine Anordnung zur Überführung, Massenbestimmung und -abgrenzung von Flüssigkeiten, insbesondere für Getränke wie Milch oder Bier, nach dem Obergbegriff des Anspruchs 1.

Die Anordnung der einleitend gekennzeichneten Gattung entspricht im wesentlichen der Anordnung nach der DE-PS 3545160. Im Unterschied zur Anordnung des älteren Patents geht die vorliegende Anordnung von wenigstens einem Meßbehälter aus, der mit einem Zulauf und einem Ablauf für die im Meßbehälter gestapelte Flüssigkeit ausgerüstet ist.

Die in der DE-PS 3545160 vorgenommene Beschränkung auf wenigstens zwei Meßbehälter, die jeweils über steuerbare Ventilanordnungen einerseits mit einer Zulaufleitung zwecks Befüllung aus dem Anlieferungsbehälter und andererseits mit einer Ablaufleitung zwecks Entleerung in den Sammelbehälter verbindbar sind, wird fallengelassen. Insbesondere das Merkmal einer Verbindung zwischen Zulaufleitung und Meßbehälter einerseits und Ablaufleitung und Meßbehälter andererseits im Sinne einer zeitlich unbegrenzten, fortwährenden gegenständlichen Verrohrung entfällt als gattungsprägendes Merkmal im Hinblick auf einen weitergefaßten Gattungsbereich.

Wie einleitend bereits festgestellt, beschränkt sich die Anordnung nach der DE-PS 3545160 auf wenigstens zwei Meßbehälter, die jeweils mit einer Zulaufleitung und einer Ablaufleitung verbunden sind. Damit während des Wiegens keinerlei Kraftwirkung über diese Leitungen auf die Meßbehälter auftreten, müssen die Verbindungen von den Meßbehältern und den zugeordneten Leitungsabschnitten im Bereich zwischen Meßbehälter und Stützfläche außerordentlich elastisch sein. Da die Meßbehälter erfindungsgemäß nur geringe Verschiebungen parallel zur Stützfläche erfahren, sind an diese Leitungsverbindungen jedoch bei weitem nicht so hohe Ansprüche zu stellen, wie bei Anordnungen nach dem Stand der Technik, die pendelnd aufgehängte Wiegetanks aufweisen (DE 3332434 T1, DE-OS 2821372). Allerdings lassen sich hohe Meßgenauigkeiten bei der Gewichtskraftbestimmung der im Meßbehälter gestapelten Flüssigkeit mit Meßbehältern, an die die Zulauf-und Ablaufleitung auch während des Wiegens angeschlossen sind, generell nur mit hohem konstruktivem Aufwand realisieren.

Selbst wenn man bei Anordnungen nach dem Stand der Technik, bei denen die Meßbehälter pendelnd aufgehängt sind, die Nachteile durch die Unvermeidbarkeit von Kraftwirkungen infolge Leitungsanschluß an den Meßbehälter außer acht läßt, bleiben weitere Nachteile sowohl gegenüber Anordnungen nach der DE-PS 3545160 als auch gegenüber jenen der vorliegenden Erfindung. Zum einen benötigt ein pendelnd aufgehängter Meßbehälter gegenüber einem gefesselten innerhalb der Gesamtanordnung einen höheren Raumbedarf, zum anderen benötigt ein Meßbehälter, der auspendeln kann, relativ lange Zeit, um in die zur Wägung notwendige Ruhelage zu gelangen. Diese Zeitspanne steht für Anordnungen zur zur Übernahme, Massenbestimmung und -abgrenzung von Flüssigkeiten in der Regel nicht zur Verfügung.

Aus der DE-U-8535376 ist eine Anordnung mit Waage, ein mit dieser verbundenes oben offenes Wägegefäß mit Flüssigkeitszulauf und ein letzteren über ein Ventil zulieferndes Flüssigkeitsvoratsgefäß bekannt, bei der der Flüssigkeitszulauf in das Wägegefäß berührungslos erfolgt. Mit der bekannten Anordnung sollen Feinteile eines Gutes laufend bestimmt werden. Dies geschieht dadurch, daß das zu bestimmende Gut in eine Flüssigkeit eingeleitet und dort verwogen wird. Selbst wenn bei der bekannten Anordnung der Flüssigkeitszulauf so ausgestaltet ist, daß er keinerlei das Wägeergebnis verfälschende Kraftwirkungen ausübt, so kann die Anordnung weder in ihrem allgemeinem Aufbau noch hinsichtlich der speziellen Ausgestaltung ihres Flüssigkeitszu- und Flüssigkeitsablaufs als Vorbild für eine Anordnung der einleitend gekennzeichneten Gattung dienen.

Nicht nur die an den Meßbehälter angeschlossenen Leitungen für Zu- und Ablauf der Flüssigkeit nach dem Stand der Technik bewirken durch ihre Kraftwirkungen eine Verfälschung des Wägeergebnisses, sondern auch die Lagerung des Meßbehälters selbst kann dieses verfälschen. In der US-A-44481985 ist ein Meßbehälter gezeigt, dessen Lagerung durch Stabilisatoren sichergestellt wird, die ihn in radialer Richtung fixieren, in axialer Richtung jedoch weitestgehend flexibel sind. Eine derartige Anordnung bedarf einer außerordentlich exakten Justierung, damit in der Wiegeposition des Meßbehälters das Meßergebnis verfälschende Kraftwirkungen vermieden werden. Aber auch die genaueste Justierung kann die Tatsache nicht aus der Welt schaffen, daß eine im Zuge der Wägung des Meßbehälters notwendige axiale Veschiebung eine, wenn auch minimale, Längenänderung der Stabilisatoren erforderlich macht, wodurch Kraftwirkungen entstehen, die letztlich das Wägeergebnis verfälschen können.

Es ist Aufgabe der vorliegenden Erfindung, die Anordnung nach der DE-PS 3545160 einerseits insgesamt zu vereinfachen und andererseits derart zu verbessern und weiterzubilden, daß die Gewichtskraftbestimmung der im Meßbehälter gestapelten Flüssigkeit mit noch höherer Genauigkeit und weitestgehend frei von das Meßergebnis verfälschenden äußeren und inneren Kraftwirkungen erfolgt.

Diese Aufgabe wird durch die kennzeichnenden Merkmale des Anspruchs 1 gelöst.

Vorteilhafte Ausgestaltungen der erfindungsgemäßen Anordnung und vorteilhafte Verfahren mittels dieser Anordnungen sind in den abhängigen Anspüchen beschrieben.

Da ein Auspendeln des Meßbehälters nicht mehr zugelassen wird, entfällt die hochgradig elastische Leitungsverbindung zu dem Meßbehälter, die bei Anordnungen nach dem Stand der Technik unabdingbar sind. Die angegebenen erfindungsgemäßen Leitungsanordnungen und -führungen gewährleisten eine kraftwirkungsfreie Wägung.

Damit die Kräfte messende Einrichtung, die sogenannte Wiegezelle, nur während der Wägung des Meßbehälters belastet wird, ist vorgesehen, daß der Meßbehälter in eine die Kräfte messende Einrichtung wechselweise von der Gewichtskraft entlastende oder mit der Gewichtskraft belastende Position überführbar ist.

Dieses wird unter anderem dadurch möglich, daß nach einer weiteren vorteilhaften Ausführungsform der erfindungsgemäßen Anordnung eine sich auf der Stützfläche bzw. dem Rahmen unmittelbar oder mittelbar abstützende Hubeinrichtung entweder über die Kräfte messende Einrichtung oder unmittelbar am Meßbehälter angreift, so daß dadurch die Gewichtskraft des Meßbehälters der Wiegezelle entweder aufgeprägt oder von dieser entfernt werden kann.

Gleichzeitig mit der Überführung des Meßbehälters in die die Kräfte messende Einrichtung mit der Gewichtskraft belastende Position wird der Zulaufleitungsabschnitt und/oder der Ablaufleitungsabschnitt vom Meßbehälter getrennt. Dies geschieht auf einfache Weise dadurch, daß beim Verschieben des Meßbehälters, mit dem Ziel einer Belastung der Wiegezelle, gleichzeitig der Zulaufleitungsabschnitt und/oder der Ablaufleitungsabschnitt vom Meßbehälter getrennt werden bzw. wird.

Um die erfindungsgemäße Anordnung mit einem einzigen Meßbehälter zu betreiben, ohne daß auf eine kontinuierliche Förderung der zu überführenden Flüssigkeit aus wenigstens einem ersten Behälter in wenigstens einen zweiten Behälter verzichtet werden muß, sieht eine vorteilhafte Weiterbildung der Anordnung gemäß der Erfindung vor, daß der Zulaufleitungsabschnitt aus einem ersten Speicherbehälter ausmündet, und der Ablaufleitungsabschnitt in einen zweiten Speicherbehälter einmündet. Der dem Meßbehälter vorgeschaltete Speicherbehälter ist dabei so zu bemessen, daß in letzterem die während des Wiegens und des Entleerens des einzigen Meßbehälters kontinuierlich weiter geförderte Flüssigkeit bevorratet werden kann. Der dem einzigen Meßbehälter nachgeschaltete Speicherbehälter wird aus Sicherheitsgründen zweckmäßigerweise so bemessen, daß er den gesamten Inhalt des vollständig befüllten Meßbehälters aufnehmen kann.

Nach einer vorteilhaften Ausführungsform der Anordnung gemäß der Erfindung ist vorgesehen, daß die Stützfläche als Rahmen ausgebildet ist, wobei gemäß einer weiteren vorteilhaften Ausführungsform der Verschiebefreiheitsgrad des Meßbehälters durch Lagerungen innerhalb des Rahmens erreicht wird, die in Richtung der Verschiebung weitesgehend kraftwirkungsfrei arbeiten und den Meßbehälter in anderen Richtungen starr begrenzen.

Als Lagerungen des Meßbehälters auf der Stützfläche kommen beispielsweise Wälzkörperlagerungen in Frage, die am Meßbehälter angeordnete Lagerzapfen radial führen. Durch diese Anordnung wird erreicht, daß die beim Übergang von der Haft- zur Rollreibung zu überwindenden Kräfte sehr klein sind, wodurch die Meßempfindlichkeit der Anordnung, insbesondere bei sehr kleinen Masseänderungen, deutlich erhöht wird. Derartige geringe Masseänderungen werden dem Meßbehälter beispielsweise im Eichversuch aufgeprägt, welcher im Gegensatz zum normalen Meßbetrieb der Anordnung eine permanente, statische Beaufschlagung der Kräfte messenden Einrichtung durch den Meßbehälter vorschreibt. Im normalen Meßbetrieb laufen einerseits sämtliche zum Betrieb der Anordnung vorgesehenen Aggregate, so daß durch die auftretenden Vibrationen der Haftreibungseinfluß in den Lagern von vornherein überwunden wird, andererseits wird bei jedem neuerlichen Anhängen des Meßbehälters an die Kräfte messende Einrichtung nach einer Gewichtskraftänderung ein "Losbrechen" des Lagerzapfens im jeweils zugeordneten Lager sichergestellt. Der gegenüber dem normalen Meßbetrieb, aufgrund bestehender Vorschriften, atypisch durchzuführende Eichversuch verlangt, wie vorstehend bereits erwähnt, den Stillstand sämtlicher Vibrationen erzeugender Aggregate, und er bestimmt weiterhin, daß der Meßbehälter permanent die Kräfte messende Einrichtung beaufschlagt, so daß die im Eichversuch durch Auflegen von Eichgewichten vorzunehmende Gewichtskraftänderung bei jedem Prüfschritt die vorliegende Haftreibung jeweils überwinden muß. Insbesondere bei sehr kleinen Gewichtskraftänderungen wird die Meßempfindlichkeit der Anordnung bei herkömmlichen Lagerungsausführungen durch den Haftreibungseinfluß merklich beeinträchtigt. Hier schafft die vorstehend erläuterte Lagerungsvariante Abhilfe.

Eine andere vorteilhafte Ausführungsform der erfindungsgemäßen Anordnung sieht vor, die Feder-/Dämpfungs-Elemente am Rahmen derart anzuordnen, daß der Schwerpunkt des zu dämpfenden Rahmens in einer durch die Feder-/Dämpfungs-Elemente hindurchgelegt gedachten Ebene liegt. Dadurch werden insbesondere bei Querschwingungen und Querbewegungen die daraus resultierenden Kräftemomente, welche durch die in den Feder-/Dämpfungs-Elementen und im Schwerpunkt angreifenden Kräfte gebildet werden, minimiert.

Damit das Meßergebnis der Wägung im Rahmen der zulässigen Toleranz von der Auswerteeinrichtung möglichst schnell akzeptiert wird, genügt es nicht nur, Resonanzerscheinungen zwischen den anregenden

3

Schwingungen von außen und der Eigenfrequenz des Systems zu vermeiden, sondern es muß auch verhindert werden, daß die in den Meßbehälter eingeleitete Flüssigkeit Schwing- und Schwallbewegungen über einen längeren Zeitraum ausführt. Aus diesem Grunde sieht eine weitere vorteilhafte Ausführungsform der erfindungsgemäßen Anordnung vor, daß im Meßbehälter wenigstens ein Schwallblech vorgesehen ist, das in der Meßbehälter-Längsachse orientiert ist. Darüber hinaus sieht eine weitere Ausführungsform der erfindungsgemäßen Anordnung vor, mehrere Schwallbleche radial zum Zentrum des Meßbehälters auszurichten und diese einerseits jeweils am Mantel des Meßbehälters angreifen zu lassen und andererseits im Zentrum des Meßbehälters miteinander zu verbinden. Werden die Vorkehrungen zur radialen Fixierung, wie dies eine andere Ausgestaltung der erfindungsgemäßen Anordnung vorschlägt, in der radialen Richtung der Schwallbleche und in deren Fortsetzung nach außen angeordnet, so gelingt es auf einfache Weise, die zur Lagerung des Meßbehälters notwendigen Kräfte ohne Verformung des Meßbehälters in diesen einzuleiten.

Eine vorteilhafte Weiterbildung der erfindungsgemäßen Anordnung sieht vor, daß der Zulauf- und der Ablaufleitungsabschnitt jeweils über eine Kupplung an den Meßbehälter angeschlossen sind. Dadurch gelingt es, die Gewichtskraftbestimmung der im Meßbehälter gestapelten Flüssigkeit vollständig frei von das Meßergebnis verfälschenden äußeren Kraftwirkung durchzuführen.

Den gleichen Vorteil erreicht man, wenn, wie dies eine weitere vorteilhafte Ausführungsform der erfindungsgemäßen Anordnung vorsieht, der Zulaufleitungsabschnitt über eine Behälteröffnung in den Meßbehälter berührungsfrei hineingeführt und der Ablaufleitungsabschnitt über eine Kupplung an den Meßbehälter anschließbar ist.

Eine andere Weiterbildung der erfindungsgemäßen Anordnung erreicht den gleichen Vorteil dadurch, daß der Zulaufleitungsabschnitt über eine Behälteröffnung in den Meßbehälter berührungsfrei hineingeführt und der Ablaufleitungsabschnitt entweder von dem Meßbehälter berührungsfrei mittels eines Auffanggefäßes fortgeführt oder aus dem Meßbehälter berührungsfrei herausgeführt ist.

Ein Verfahren zur Überführung, Massenbestimmung und -abgrenzung von Flüssigkeiten mittels einer Anordnung gemäß der Erfindung sieht vor, daß mit der zu überführenden Flüssigkeit ein mit wenigstens zwei Meßbehältern ausgestattetes Meßsystem wechselweise bzw. in zyklischer Reihenfolge befüllt, entleert oder teilentleert wird, und daß die Masse des befüllten und entleerten oder teilentleerten Meßbehälters bestimmt wird. Durch eine derartige verfahrenstechnische Kombination werden einerseits die Vorteile der erfindungsgemäßen Anordnung genutzt, andererseits werden die bislang bei der Anwendung von Wiegesystemen auftretenden zeitlichen Probleme, hervorgerufen durch die diskontinuierliche Betriebsweise, überwunden.

Eine andere vorteilhafte Ausgestaltung eines Verfahrens mittels einer erfindungsgemäßen Anordnung, bei der einem einzigen Meßbehälter ein erster Speicherbehälter vor- und ein zweiter nachgeschaltet ist, sieht vor, daß die Flüssigkeit kontinuierlich in den ersten Speicherbehälter gefördert und kontinuierlich aus dem zweiten Speicherbehälter abgefördert wird, und daß die Masse des befüllten und des entleerten oder teilentleerten Meßbehälters bestimmt wird. Durch die Speicherung der zu überführenden Flüssigkeit vor und nach dem diskontinuierlich beschickbaren Meßbehälter wird eine kontinuierliche Überführung der Flüssigkeit sichergestellt, wobei die Gesamtanordnung in Bezug auf Meßbehälter und Kräfte messende Einrichtung die denkbar einfachste Konfiguration annimmt.

Mit der erfindungsgemäßen Anordnung ist darüber hinaus ein Problem lösbar, das bislang bei der Übernahme und Mengenabgrenzung von Milch durch bekannte Meßanordnungen auftrat und in Kauf genommen werden mußte. Es handelt sich um das sogenannte Restmengenproblem in der der Einrichtung zur Mengenabgrenzung vorgeschalteten Fördereinrichtung und den dieser Fördereinrichtung nachgeordneten Leitungen, sofern in diesen Leitungen eine Probeentnahmevorrichtung angeordnet ist. Die erwähnte Restmenge wird bei bekannten Anordnungen in die Milch und somit in die Milchprobe des nachfolgenden Lieferanten verschleppt, falls, wie dies in jedem Falle zu fordern ist, das Probenahmesystem streng repräsentativ arbeitet.

Ein nur mit der erfindungsgemäßen Anordnung durchführbares Verfahren sieht vor, daß die in der ersten Fördereinrichtung, dem nachgeordneten Zulaufleitungsabschnitt und den Meßbehältern verbleibenden Restmengen eines Lieferanten kraftwirkungsfrei über absperrbare Entleerungsleitungen in einen am Meßbehälter angeordneten Auffangbehälter entleert werden, daß die in den Auffangbehälter überführte Restmenge beim nachfolgenden Lieferanten verwogen und kraftwirkungsfrei über eine absperrbare Ablaufleitung in den Ablaufleitungsabschnitt überführt wird. Durch das erfindungsgemäße Verfahren wird einerseits die Restmenge des aktuellen Lieferanten aus dem Annahmesystem entfernt, ohne daß sie für die Mengenbilanz verlorengeht. Da der nachfolgende Lieferant ein "trockenes" Annahmesystem vorfindet und ein "benetztes" System hinterläßt, muß diese Haftmilchmenge, die in guter Näherung eine Systemkonstante darstellt, mengenmäßig berücksichtigt werden. Dies geschieht erfindungsgemäß dadurch, daß die Restmenge in einen am Meßbehälter angeordneten Auffangbehälter entleerbar ist und dort verwogen werden kann. Bei bekannten Anordnungen, die volumetrisch arbeiten, ist eine derartige Verfahrensweise nicht realisierbar, da in diesem Falle die Restmenge nach Beendigung der Milchübernahme und Mengenabgrenzung in die Einrichtung zur Mengenabgrenzung überführt werden müßte und dort das Abschaltniveau in unzulässiger Weise verändern würde.

Das erfindungsgemäß vorgeschlagene Verfahren erlaubt aber nicht nur die mengenmäßige Erfassung der Restmenge, sondern es stellt auch darüber hinaus sicher, daß diese Restmenge zumindest nicht vor der Probenahmestelle mit der Milch des nachfolgenden Lieferanten vermischt wird. Dies wird dadurch erreicht, daß die vorgenannte Restmenge über eine Ablaufleitung in den Ablaufleitungsabschnitt überführbar ist.

Mit der erfindungsgemäßen Anordnung ist auch das bei der Übernahme und Mengenabgrenzung von Milch auftretende Probenahmeproblem in nahezu idealer Weise lösbar, da aus dem Meßbehälter ohne großen Aufwand eine seiner Füllmenge und den Inhaltsstoffen der Flüssigkeit repräsentative Teilmenge entnehmbar ist. Hierzu wird verfahrenstechnisch vorgeschlagen, daß aus jedem verwogenen Meßbehälter eine der Füllmenge und den Inhaltsstoffen repräsentative Teilmenge entnommen und in einen Probenvorlaufbehälter überführt wird, daß die Teilmengen dort gestapelt und miteinander vermischt werden, und daß aus der Gesamtmenge im Probenvorlaufbehälter eine Probenmenge in ein Probengefäß abgefüllt und die verbleibende Restmenge in den Ablaufleitungsabschnitt entleert wird. Eine mengen- und inhaltsstoffproportionale Teilmenge aus dem Meßbehälter zu entnehmen, stößt auf keine größeren Schwierigkeiten. Hier bietet sich z.B. die bekannte Methode der Pipettierentnahme an oder eine verbesserte Vorrichtung, wie sie beispielsweise in der DE-OS 3440365 beschrieben ist. Falls die zu übernehmende Flüssigkeit die Befüllung mehrerer Meßbehälter nacheinander erfordert, so wird aus jedem befüllten Meßbehälter eine repräsentative Teilmenge entnommen, die anschließend, wie vorstehend beschrieben, verfahrenstechnisch behandelt wird.

Die vorstehend beschriebenen erfindungsgemäßen Anordnungen und die Verfahren zur quasikontinuierlichen oder diskontinuierlichen Beschickung des Meßbehälters sind nicht nur anwendbar für Getränke wie Milch oder Bier, sondern sie sind überall dort einsetzbar, wo eine exakte Massenbestimmung und -abgrenzung von Flüssigkeiten allgemein angezeigt, erforderlich oder vorgeschrieben ist. Die erfindungsgemäß vorgeschlagenen Anordnungen lösen das Problem der Überführung. Massenbestimmung und -abgrenzung von Flüssigkeiten, und zwar unabhängig davon, ob die Flüssigkeit aus mehreren Behältern eingesammelt und in einen gemeinsamen Behälter überführt, oder aber ob die Flüssigkeit aus einem gemeinsamen Behälter in mehrere Behälter verteilt wird.

Entscheidend ist lediglich, daß beim Einsammeln oder beim Verteilen von Flüssigkeit eine Massenbestimmung und -abgrenzung der einzusammelnden bzw. zu verteilenden Flüssigkeit erfolgt. Klassische Anwendungsbeispiele stellen einerseits das Sammeln von Milch von Anlieferern in einen Milchtankwagen oder die Verteilung von Faßbier aus einem mobilen Faßbier-Vorratstank in meist stationäre Faßbiertanks verschiedener, räumlich getrennter Abnehmer, z.B. Gaststätten, dar. In beiden Fällen hat eine Massenbestimmung Vorteile gegenüber einer Volumenbestimmung, da zum einen beim Einsammeln von Milch nicht unerhebliche Luftmengen mit der Milch angesaugt werden und zum anderen bei der Verteilung von Bier die darin gelöste Kohlensäure bei Druckabsenkung in erheblichem Maße gasförmig entbindet.

Die erfindungsgemäße Anordnung wird anhand von Ausführungsbeispielen in den nachfolgend erläuterten Figuren der Zeichnung im einzelnen näher beschrieben. Es zeigen

Figur 1     eine Anordnung gemäß der Erfindung in schematischer Darstellung, wobei der Meßbehälter über einen diesem vorgeschalteten ersten Speicherbehälter befüllbar und in einen nachgeschalteten zweiten Speicherbehälter entleerbar ist ;

Figur 2     eine weitere Anordnung gemäß der Erfindung in schematischer Darstellung mit einem über eine Hubeinrichtung verschiebbaren Meßbehälter ;

Figur 3     eine Draufsicht auf die Anordnung gemäß Figur 2 ;

Figur 4     eine Ausführungsform gemäß Figur 1 mit einer Vorrichtung zur Behandlung der Restmenge und einer zweiten zur Gewinnung einer repräsentativen Probemenge ;

Figur 5a-5c     weitere Anordnungen gemäß der Erfindung, wobei Zulauf zum und Ablauf vom Meßbehälter unterschiedlich ausgestaltet sind ;

Figur 6 bis 6c     andere Anordnungen gemäß der Erfindung, wobei jeweils der Zulauf von und der Ablauf nach oben erfolgt und in gleicher Weise wie bei den Anordnungen gemäß Figur 5 bis 5c ausgebildet ist.

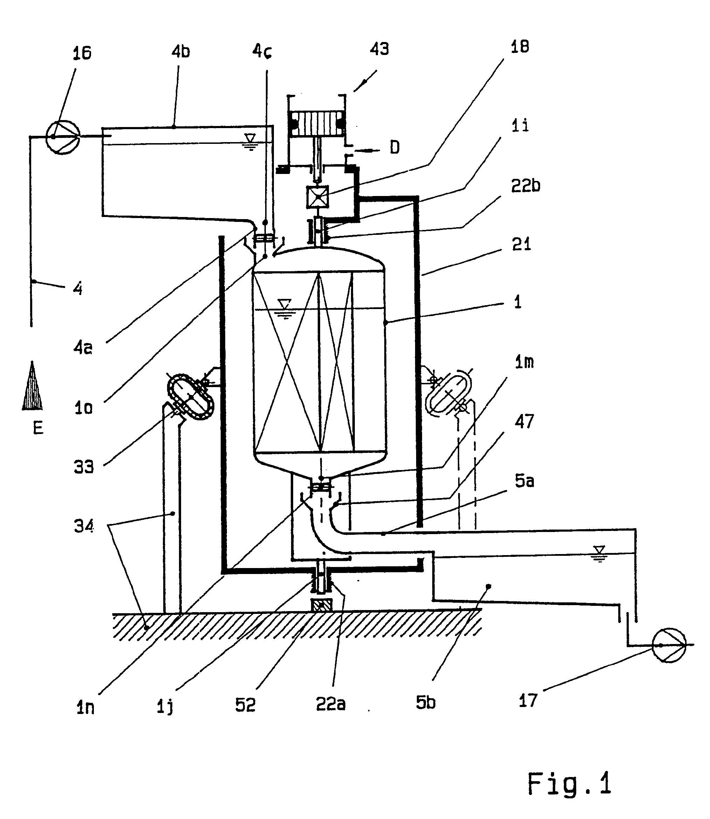

Ein Meßbehälter 1 (Figur 1) ist über einen oberen und einen unteren Lagerzapfen 1i bzw. 1j in einem Rahmen 21 mittels Radiallager 22a, 22b gelagert. Nur in Richtung seiner Lagerungsachse weist der Meßbehälter 1 einen Verschiebefreiheitsgrad auf. Die in Richtung der Lagerungsachse wirkende Kraftkomponente $F_H^*$ der Gewichtskraft F greift an einer Kräfte messenden Einrichtung 18, der sogenannten Wiegezelle, an und wird dort gemessen. Neben der schematisch dargestellten klassischen Lagerung mittels Wälz- oder Gleitlager ist alternativ auch eine Lagerung über radiale Fixierung des Meßbehälters 1 mittels Vorkehrungen 44 wie Seile oder Ketten vorgesehen, die ausschließlich Zugkräfte zwischen Rahmen 21 und Meßbehälter 1 übertragen.

Der Meßwert $F_H{}^*$ wird einer nicht dargestellten Auswerteeinrichtung übermittelt. In einer Zulaufleitung 4 ist eine erste Fördereinrichtung 16 angeordnet, mit der Flüssigkeit, insbesondere Milch oder Bier, aus einem nicht dargestellten ersten Behälter zunächst in einen ersten Speicherbehälter 4b und von dort über einen Zulaufleitungsabschnitt 4a in den Meßbehälter 1 gefördert wird. Der Zulaufleitungsabschnitt 4a mündet berührungsfrei über eine Behälteröffnung 1o in den Meßbehälter 1 ein. Dadurch werden Kraftwirkungen von der Zulaufleitung 4 oder dem Zulaufleitungsabschnitt 4a auf den Meßbehälter 1 verhindert. Der erste Speicherbehälter 4b ist über eine Absperreinrichtung 4c in dem Zulaufleitungsabschnitt 4a verschließbar.

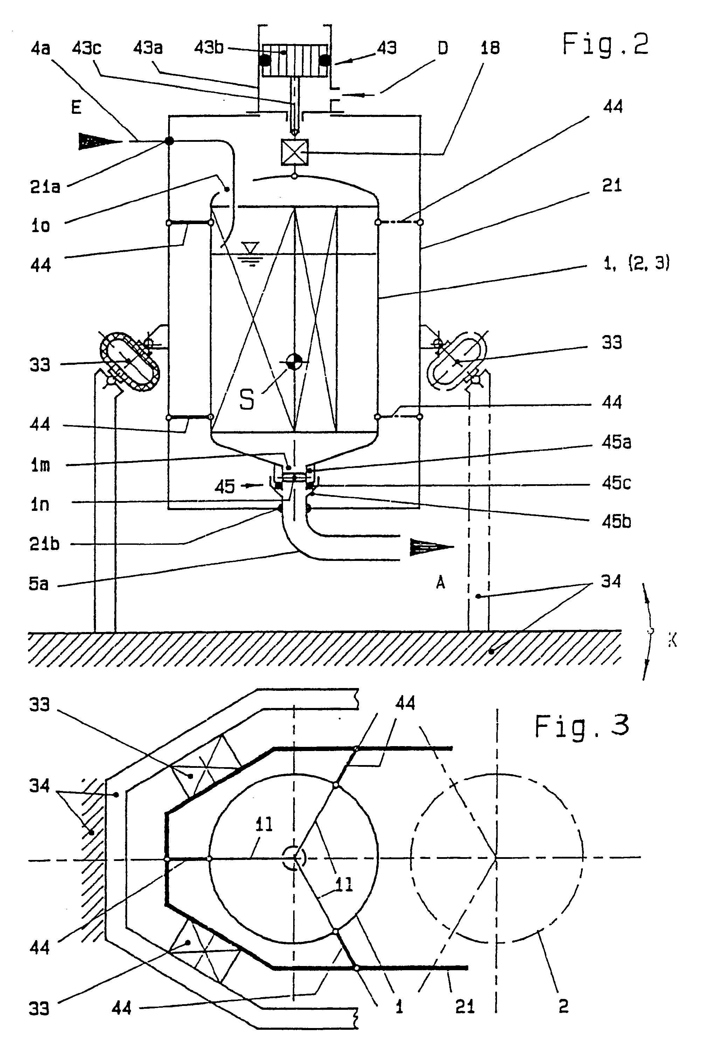

Der Meßbehälter 1 weist in seinem unteren Boden eine über eine Absperreinrichtung 1n steuerbare Auslauföffnung 1m auf, die berührungsfrei in ein Auffanggefäß 47 einmündet. Letzteres ist über einen Ablaufleitungsabschnitt 5a mit einem zweiten Speicherbehälter 5b verbunden, an den eine zweite Fördereinrichtung 17 angeschlossen ist. Lediglich während des Wiegens wird die Kräfte messende Einrichtung 18 durch den Meßbehälter 1 belastet. Während der anderen Verfahrensschritte stützt er sich über den unteren Lagerzapfen 1i auf einem Auflager 52 durch Absenken über eine Hubeinrichtung 43 ab. Mit E ist der Eintrittsstrom gekennzeichnet, der über die Zulaufleitung 4 zur ersten Fördereinrichtung 16 und von dort in den ersten Speicherbehälter 4b gelangt. Die Bauteile 33, 34 und 43 und ihre Funktion werden in der Beschreibung zu Figur 2, 2a näher erläutert.

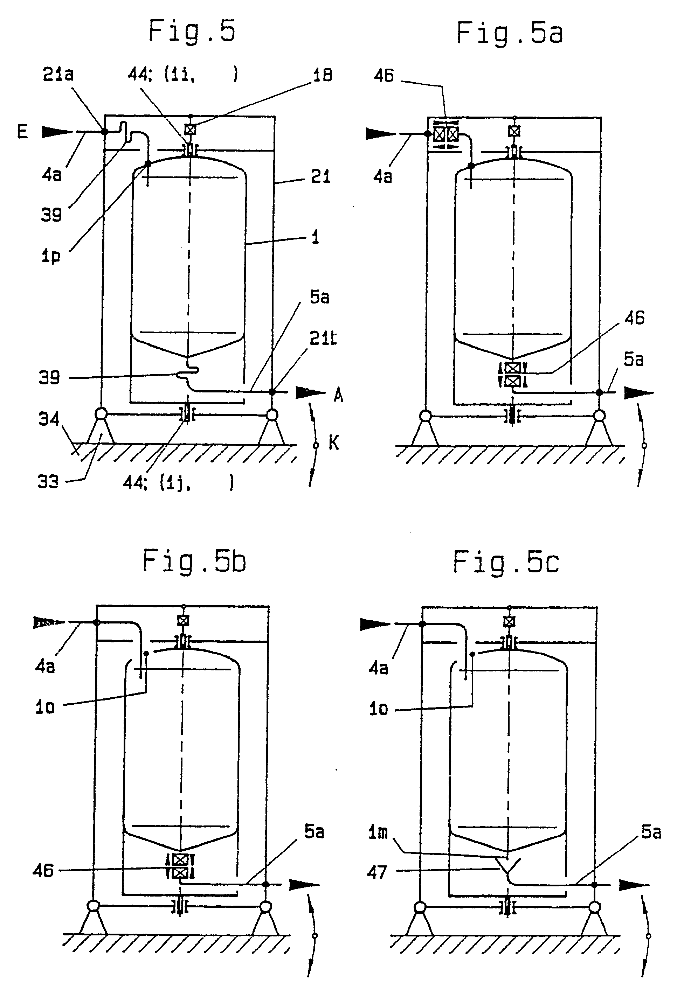

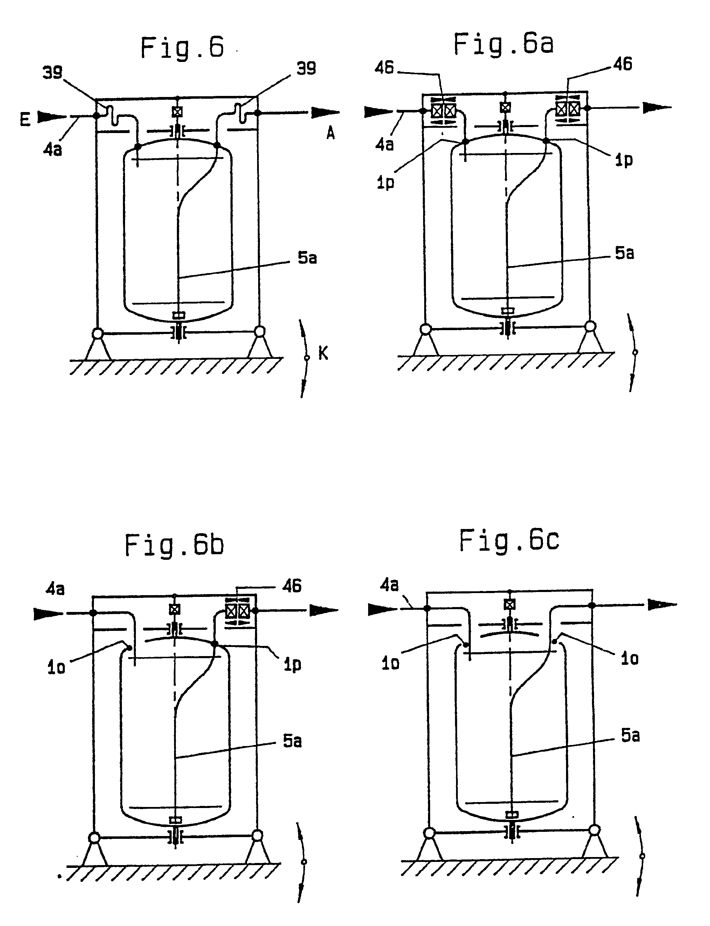

Erfindungsgemäß können der Zu- und der Ablauf zum bzw. vom Meßbehälter 1 auch anders ausgestaltet sein. Diesbezügliche Ausführungsformen sind in den nachfolgend beschriebenen Figuren 5a bis 5c und 6a bis 6c dargestellt und erläutert. Es ist auch nicht zwingend notwendig, daß der Zulaufleitungsabschnitt 4a, wie in Figur 1 dargestellt, an der Oberseite des Meßbehälters 1 einmündet. Im Gegensatz hierzu ist eine von unten in den Meßbehälter 1 eintretende Leitung, die sich im Innern des Meßbehälters beispielsweise bis in den oberen Bodenbereich fortsetzt, denkbar. Ebenso muß der Ablaufleitungsabschnitt 5a nicht an die Unterseite des Meßbehälters 1 angeschlossen sein. Falls die Flüssigkeit über eine zweite Fördereinrichtung 17 aus dem Meßbehälter 1 abgesaugt werden kann, so ist es auch möglich, den Ablaufleitungsabschnitt 5a nach oben aus dem Meßbehälter 1, wie die Anordnungen gemäß den Figuren 6a bis 6c zeigen, herauszuführen.

In den Figuren 2 und 3 ist eine weitere erfindungsgemäße Anordnung schematisch dargestellt. Figur 2 zeigt eine Ansicht der Anordnung im Mittelschnitt, wobei die Feder-/Dämpfungs-Elemente 33 in Verbindung mit ihrer fahrgestellseitigen Lagerung 34 in die Schnittebene hineingeklappt wurden. Figur 3 zeigt die Draufsicht auf die vorgenannte Anordnung.

Erfindungsgemäß ist der Zulaufleitungsabschnitt 4a über die Behälteröffnung 1o berührungsfrei in den Meßbehälter 1 hineingeführt. Der Ablaufleitungsabschnitt 5a ist über eine Kupplung 45, die aus einer oberen und einer unteren Kupplungshälfte 45a bzw. 45b und einer die Kupplungshälften gegeneinander abdichtenden Dichtung 45c besteht, an den Meßbehälter 1 anschließbar. Die in der oberen Kupplungshälfte 45a ausmündende Auslauföffnung 1m des Meßbehälters 1 ist über die in ihr angeordnete Absperreinrichtung 1n steuerbar.

Die Lagerung des Meßbehälters 1 erfolgt über Vorkehrungen 44, die den Meßbehälter 1 radial fixieren, ihm aber eine kraftwirkungsfreie, begrenzte axiale Verschiebung in Richtung seiner Symmetrieachse ermöglichen. Die Vorkehrungen 44 greifen einerseits am Meßbehälter 1 und andererseits am Rahmen 21 an. Die Vorkehrungen 44 greifen derart am Mantel des Meßbehälters 1 an, daß sie sich in der radialen Richtung der Schwallbleche 1l und in deren Fortsetzung nach außen orientieren. Da die Schwallbleche sternförmig angeordnet und radial zum Zentrum des Meßbehälters 1 ausgerichtet und dort miteinander verbunden sind, ergibt sich eine günstige Krafteinleitung in den Meßbehälter 1, ohne daß dadurch die Gefahr einer Deformation des Mantels des Meßbehälters 1 besteht.

Während der Zulauf- und der Ablaufleitungsabschnitt 4a bzw. 5a über Befestigungen 21a bzw. 21b fest mit dem Rahmen 21 verbunden sind, kann der Meßbehälter 1 über eine Hubeinrichtung 43 axial verschoben werden. Sie besteht aus einem Zylinder 43a, einem Kolben 43b und einer Kolbenstange 43c. Letztere ist mit einer Kräfte messenden Einrichtung 18, einer sogenannten Wiegezelle, verbunden. An ihr wiederum hängt der Meßbehälter 1. Die Verbindungen zwischen der Kräfte messenden Einrichtung 18 und der Kolbenstange 43c einerseits und dem Meßbehälter 1 andererseits sind biegeweich ausgeführt ; sie können lediglich Zugkräfte übertragen. Der Kolben 43b ist innerhalb des Zylinders 43a über ein Druckmittel D beaufschlagbar, so daß eine begrenzte axiale Hubbewegung des Meßbehälters 1 durchführbar ist. Falls die Hubeinrichtung 43 nicht angesteuert ist, stützt sich die gesamte Gewichtskraft des Meßbehälters 1 einschließlich der ggf. in ihm gestapelten Flüssigkeit, über die Kupplung 45 auf dem Ablaufleitungsabschnitt 5a ab. Dadurch wird gleichzeitig eine sichere Abdichtung der beiden Kupplungshälften erreicht. Die Kräfte messende Einrichtung 18 ist in dieser Position vollständig von Gewichtskräften entlastet. Der Meßbehälter 1 läßt sich über die Hubeinrichtung 43 in eine die Kräfte messende Einrichtung 18 mit der Gewichtskraft des Meßbehälters 1 belastete Position überführen. Gleichzeitig mit dieser Überführung wird der Ablaufleitungsabschnitt 5a vom Meßbehälter 1 getrennt. In dieser nunmehr erreichten Wiegeposition ist der Meßbehälter 1 vollständig frei von verfälschenden äußeren Kräften, da ja auch der Zulaufleitungsabschnitt 4a über die Behälteröffnung 1o in den Meßbehälter 1 berührungsfrei hineingeführt ist. Selbstverständlich sind auch Lösungen möglich, bei denen sich der Meßbehälter 1 auf der Wiegezelle 18 unter Ausübung von Druckkräften abstützt, und wobei die Hubeinrichtung auch unterhalb des Meßbehälters 1 angeordnet sein kann.

Um äußere Kräfte vom Meßbehälter 1 und von der Kräfte messenden Einrichtung 18 fernzuhalten und auch Schwing- und Schwappbewegungen, die unter Umständen über die in den Meßbehälter 1 eingeleitete Flüssigkeit im Innern des Systems angeregt werden, möglichst schnell abklingen zu lassen, ist vorgesehen, daß der Rahmen 21 über Feder-/Dämpfunfs-Elemente 33 in der gesamten Anordnung bzw. auf dem Fahrgestell 34 gelagert ist. Dabei sind die Feder-/Dämpfungs-Elemente 33 derart angeordnet, daß der Schwerpunkt S des zu dämpfenden Rahmens 21 mit all seinen Bestandteilen in eine durch die Feder-/Dämpfungs-Elemente 33 hindurchgelegt gedachten Ebene liegt. Durch diese Anordnung lassen sich Kräftemomente, die aus den im Massenschwerpunkt angreifenden d'Alembertschen Trägheitskräften und den Reaktionskräften in den Feder-/Dämpfungs-Elementen 33 gebildet werden, weitestgehend minimieren.

Mit E ist der Eintrittsstrom gekennzeichnet, der über den Zulaufleitungsabschnitt 4a in den Meßbehälter 1 gelangt. Die Befüllung des Meßbehälters 1 und die Füllstandsbegrenzung sind in der DE-PS- 3545160 beschrieben. Wie vorstehend bereits erläutert, erfolgt bei der dargestellten Anordnung die Wagung ohne kräftemäßige Rückwirkungen vom Zulauf- und Ablaufleitungsabschnitt 4a bzw. 5a auf den Meßbehälter 1, da ersterer in jeder Phase des Befüllungs- und Entleerungsvorganges berührungsfrei in den Meßbehälter 1 hineingeführt ist, und letzterer während des Wiegens vom Meßbehälter 1 getrennt ist. Zwecks Entleerung des Meßbehälters 1 muß dieser über die Hubeinrichtung 43 wieder mit dem Ablaufleitungsabschnitt 5a verbunden werden, so daß der Austrittsstrom A über die mit der Absperreinrichtung 1n steuerbare Auslauföffnung 1m in den Ablaufleitungsabschnitt 5a und von dort in die nachgeordnete Anordnung überführt werden kann. Mit der Bezeichnung K ist angedeutet, daß die gesamte Anordnung bzw. das Fahrgestell 34 räumliche Kipp- bzw. Neigungsbewegungen ausführen kann.

In der Draufsicht (Figur 3) ist ein zweiter Meßbehälter 2 angedeutet, der zusammen mit dem Meßbehälter 1 wechselweise befüllt und entleert oder teilentleert werden kann, so daß eine quasikontinuierliche Überführung, Massenbestimmung und -abgrenzung von Flüssigkeiten durchführbar ist.

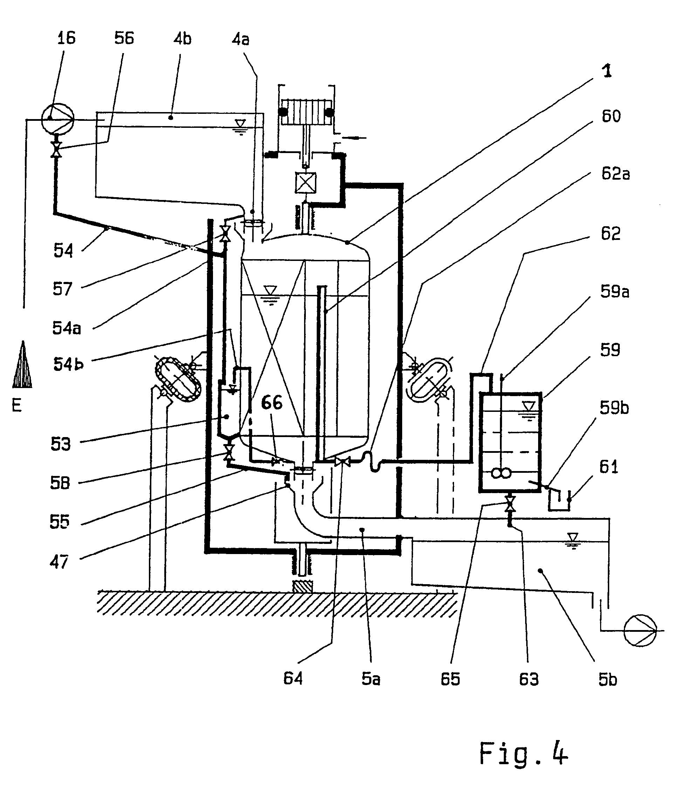

Figur 4 zeigt die Anordnung gemäß Figur 1 mit einer erfindungsgemäßen Vorrichtung zur Behandlung der Restmenge (linksseitig dargestellt) und einer weiteren zur Gewinnung einer repräsentativen Probemenge (rechtsseitige Darstellung). Eine an sich bekannte, nicht dargestellte Probenahmeeinrichtung befindet sich in der Regel hinter der ersten Fördereinrichtung 16 (vgl. linksseitige Darstellung der Figur 3). Die bis zu dieser Probeentnahmeeinrichtung im System nach Beendigung der Überführung der Flüssigkeit, insbesondere in der ersten Fördereinrichtung 16 und in den nachgeschalteten Zulaufleitungsabschnitt 4a verbleibende Restmenge wird in der Zeit, in der die Anordnung zum nächsten Lieferanten verbracht wird, selbsttätig über eine erste Entleerungsleitung 54 in einen Auffangbehälter 53 entleert. Die erste Entleerungsleitung 54 ist am Tiefstpunkt der ersten Fördereinrichtung 16 angeschlossen und verläuft mit Gefälle zum Auffangbehälter 53. Bei Anordnung eines ersten Speicherbehälters 4b ist es vorteilhaft, wenn die in diesem Speicherbehälter verbleibende Haftmilchmenge an der tiefsten Stelle, z.B. im Zulaufleitungsabschnitt 4a, der berührungsfrei in den Meßbehälter 1 einmündet, gesammelt und über eine zweite Entleerungsleitung 54a ebenfalls in den Auffangbehälter 53 verbracht wird. Der Auffangbehälter 53 kann über eine erste Ablaufleitung 55 in das Auffanggefäß 47 des Ablaufleitungsabschnittes 5a entleert werden. Über Absperreinrichtungen 56, 57 und 58 können die vorgenannten Leitungen verschlossen werden. Die Gründe für die Handhabung der Restmenge wurden vorstehend bereits genannt. Das Verwiegen der Restmenge erfolgt beim nachfolgenden Lieferanten, und zwar zweckmäßgerweise bei der Massenbestimmung der ersten Teilmenge der zu überführenden Flüssigkeit. Das erfindungsgemäße Verfahren zur Bestimmung der Restmenge gewährleistet eine einwandfreie Mengenbilanz für jeden einzelnen Lieferanten, ohne daß die Flüssigkeiten, insbesondere die Milch verschiedener Lieferanten mit unterschiedlicher Qualität, vor der Probenahme miteinander vermischt werden. Die vorstehend erläuterte erfindungsgemäße Anordnung bleibt nicht allein beschränkt auf die Anordnung mit einem Meßbehälter 1 und mit einem vor- und nachgeschalteten Speicherbehälter 4b bzw. 5b, sondern sie ist in jede erfindungsgemäße Anordnung integrierbar, bei der die in Frage kommende Restmenge aus der ersten Fördereinrichtung 16 und den nachgeschalteten Leitungen in ein Auffanggefäß 53 selbsttätig oder auch zwangsweise verbracht, am Meßbehälter 1 verwogen und anschließend in den Ablaufleitungsabschnitt 5a überführt werden kann. Falls, wie dies nachfolgend an Hand der rechtsseitigen Darstellung der Figur 3 beschrieben wird, die Probenahme aus dem Meßbehälter 1 erfolgt, wird die Restmengenerfassung auf die Erfassung der im Meßbehälter verbleibenden Haftmilchreste erweitert. Hierzu ist am tiefsten Punkt des Meßbehälters 1 eine weitere, über eine Absperreinrichtung 66 verschließbare Entleerungsleitung 54b angeschlossen, die die sich in diesem Bereich auf dem Weg zum nächsten Lieferanten sammelnden, von den Meßbehälterwänden ablaufenden Milchreste in den Auffangbehälter 53 überführt. Letzterer ist in diesem Fall so tief anzuordnen, daß einerseits in ihn eine selbsttätige Entleerung des Meßbehältersumpfes möglich ist, daß anderseits aber die selbsttätige Entleerung des Auffangbehälters 53 über die Ablaufleitung 55 in den Ablaufleitungsabschnitt 5a ebenfalls noch gegeben ist.

Die rechtsseitig in Figur 4 dargestellte Probenahmevorrichtung besteht aus einer Teilmengenentnahmevorrichtung 60, einer am Meßbehälter 1 über einen elastischen Rohrleitungsabschnitt 62a angeschlossenen Überführungsleitung 62, einem Probenvorlaufbehälter 59 mit Rühreinrichtung 59a, einer Injektions- und Abfülleinrichtung 59b und einer über eine Absperreinrichtung 65 in den zweiten Speicherbehälter 5b einmündenden zweiten Ablaufleitung 63. Die Teilmengenentnahmevorrichtung 60 kann beispielsweise eine bekannte Entnahmevorrichtung sein, welche ein sich im wesentlichen über die gesamte Füllhöhe des Meßbehälters 1 erstreckendes Entnahmestandrohr aufweist, dessen Rohrwand mit einem längslaufenden Schlitz versehen ist, welcher von einem von Antriebsmitteln betätigbaren Verschlußorgan während des Füllens des Behälters freigegeben und während der Entnahme einer für den Behälterinhalt repräsentativen Teilmenge abgeschlossen ist. Die Überführung dieser Teilmenge aus dem Meßbehälter 1 in den Probenvorlaufbehälter 59 wird über ein in der Überführungsleitung 62 angeordnete Absperreinrichtung 64 gesteuert.

Jede Füllung des Meßbehälters 1 liefert eine dieser mengen- und inhaltsstoffproportionale Teilmenge, die in den Probenvorlaufbehälter 59 überführt und dort gestapelt wird. Nach Beendigung der Überführung der Gesamtmenge an Flüssigkeit werden die im Probenvorlaufgefäß 59 bevorrateten Teilmengen miteinander innig vermischt, so daß daraus eine Probenmenge in ein Probenvorlaufgefäß 61 abfüllbar ist. Die verbleibende Restmenge im Probenvorlaufbehälter 59 wird anschließend in den zweiten Speicherbehälter 5b entleert. Der Probenvorlaufbehälter 59 wird zweckmäßigerweise so angeordnet, daß die über die Teilmengenentnahmevorrichtung 60 zu gewinnende Teilmenge selbsttätig in ihn zu überführen ist, und daß sich anschließend die in ihm verbleibende Restmenge selbsttätig in den zweiten Speicherbehälter 5b entleert.

Wird bereits durch die Art der Befüllung des Meßbehälters 1 sichergestellt, daß die in ihm befindliche Flüssigkeit hinsichtlich ihrer Inhaltsstoffe eine homogene Verteilung aufweist, so kann z.B. die der Füllung des Meßbehälters mengenproportionale Teilmenge auch anderweitig gewonnen werden. Da die im Meßbehälter 1 befindliche Flüssigkeitsmasse zum Zeitpunkt der Teilmengenentnahme bekannt ist, kann beispielsweise durch eine von dieser Menge bestimmte zeitliche Ansteuerung des Absperrventil 64 in der Überführungsleitung 62 die der Füllmenge im Meßbehälter 1 mengenproportionale Teilmenge gewonnen und in das Probenvorlaufgefäß 59 überführt werden.

Erfindungsgemäß geht es darum, den Meßbehälter 1 derart abzustützen bzw. zu lagern, daß er nur in Richtung seiner von der Kräfte messenden Einrichtung 18, der Wiegezelle, meßbaren Gewichtskraftkomponente $F_H^*$ einen Verschiebefreiheitsgrad gegenüber der Stützfläche bzw. dem Rahmen 21 aufweist. Der erforderliche Verschiebeweg ist außerordentlich gering ; er bewegt sich im Millimeterbereich. Daher sind neben klassischen Lagerungen mittels Wälz- oder Gleitlager auch Lagerungen in biegeweichen Membranen oder mittels Seilen bzw. Ketten oder anderen nur Zugkräfte übertragenden Vorkehrungen 44 möglich.

Der Meßbehälter 1 ist innerhalb des Rahmens 21 mit Vorkehrungen zur radialen Fixierung 44 gelagert. Letztere werden zweckmäßig so justiert, daß sie in der Wiegeposition, in der die Kräfte messende Einrichtung 18 mit der scheinbaren Gewichtskraft des Meßbehälters 1 voll beaufschlagt ist, senkrecht zur Meßbehälterachse verlaufen und bezogen auf die senkrechte Normalstellung des Meßbehälters 1 gerade spannungsfrei eingebaut sind. Bei einer Schrägstellung der gesamten Anordnung haben die Vorkehrungen zur radialen Fixierung 44 dann lediglich die Normalkraftanteile der Gewichtskraft (vgl. DE-PS 3545160) aufzunehmen. Beeinträchtigungen des Meßergebnisses durch Rückstellkräfte infolge Eigenspannungen in den Vorkehrungen zur radialen Fixierung 44 sind dadurch weitestgehend ausgeschlossen.

Die Figuren 5a bis 5c und 6a bis 6c zeigen erfindungsgemäße Anordnungen in schematischer Darstellung, bei denen der Zulauf zum und der Ablauf vom Meßbehälter 1 unterschiedlich ausgestaltet sind. Die Figuren 5 und 6 zeigen bezüglich der Ausgestaltung von Zu- und Ablauf Anordnungen nach dem Stand der Technik (DE-PS 3545160). Die Lagerung des Meßbehälters 1 innerhalb des Rahmens 21 ist in allen Ausführungsbeispielen in gleicher Weise schematisch dargestellt (44 ; 1i und 44 ; 1j), wodurch lediglich die Notwendigkeit einer Lagerung des Meßbehälters 1 an sich, nicht jedoch auf eine spezielle Lagerungsform hingewiesen wer soll. In Figur 5 sind alle wesentlichen, für die Beschreibung notwendigen Bezugszeichen angeführt. In den weiteren Figuren sind dann nur noch die Veränderungen gegenüber der Ausführungsform nach Figur 5 gekennzeichnet.

Der Meßbehälter 1 (Figur 5) ist über die Kräfte messende Einrichtung 18 am Rahmen 21 angelenkt. Der Zulaufleitungsabschnitt 4a ist einerseits mit dem Rahmen 21 über die Befestigung 21a und andererseits mit dem Meßbehälter 1 über die Befestigung 1p festverbunden. Ein elastischer Rohrleitungsabschnitt 39 sorgt für einen weitestgehend kraftwirkungsfreien Anschluß des Zulaufleitungsabschnittes 4a am Meßbehälter 1. Der Ablaufleitungsabschnitt 5a ist in gleicher Weise einerseits mit dem Rahmen 21 über die Befestigung 21b und andererseits mit dem Meßbehälter 1, unter Zwischenschaltung eines weiteren elastischen Rohrleitungsabschnittes 39, fest verbunden. Der Rahmen 21 ist mit dem Fahrgestell 34 unmittelbar oder mittelbar im wesentlichen ohne eigene Bewegungsfreiheitsgrade, allenfalls unter Zwischenschaltung von

8

Feder/Dämpfungs-Elementen 33, verbunden. Der Rahmen 21 kann somit mit dem Meßbehälter 1 und allen anderen Bestandteilen eine räumliche Neigungsbewegung K fast unverändert nachvollziehen. Mit E und A sind der Eintritts- bzw. der Austrittsstrom der im Meßbehälter abgegrenzten und gewichtskraftbestimmten Flüssigkeit gekennzeichnet.

Figur 5a zeigt demgegenüber eine erfindungsgemäße Anordnung, bei der sowohl der Zulauf- als auch der Ablaufleitungsabschnitt 4a bzw. 5a über jeweils eine Kupplung 46 an den Meßbehälter 1 angeschlossen bzw. von diesem gelöst werden können.

Bei der Anordnung gemäß Figur 5b ist der Zulauf- als auch der Ablaufleitungsabschnitt 4a bzw. 5a über die Behälteröffnung 1 berührungsfrei in den Meßbehälter 1 hineingeführt. Der Ablaufleitungsabschnitt 5a ist, wie bei der Anordnung gemäß Figur 5a, über die Kupplung 46 an den Meßbehälter 1 anschließbar.

Bei der Anordnung gemäß Figur 5c haben sowohl der Zulauf- als auch der Ablaufleitungsabschnitt 4a bzw. 5a zu keinem Zeitpunkt eine Verbindung mit dem Meßbehälter 1. Der Zulaufleitungsabschnitt ist, in gleicher Weise wie bei der Anordnung gemäß Figur 5b, in den Meßbehälter 1 berührungsfrei hineingeführt. Der Ablaufleitungsabschnitt 5a erweitert sich an seinem meßbehälterseitigen Ende in das Auffanggefäß 47, in welches die steuerbare Auslauföffnung 1m des Meßbehälters 1 berührungsfrei einmündet.

Die Anordnungen der Figuren 6 bis 6c entsprechen jenen der Figuren 5 bis 5c, mit dem Unterschied, daß der Ablaufleitungsabschnitt 5a nicht im unteren Bodenbereich des Meßbehälters 1 angeordnet, sondern über seinen oberen Bodenbereich herausgeführt ist. Die in den Figuren 6, 6a und 6b dargestellten Lösungen sind im Hinblick auf die Ausgestaltung von Zulauf- und Ablaufleitungsabschnitt 4a bzw. 5a im Bereich zwischen dem Rahmen 21 und dem Meßbehälter 1 jeweils identisch mit den Lösungen in den Figuren 5, 5a und 5b. Bei der Anordnung gemäß Figur 6c ist der Ablaufleitungsabschnitt 5a, ebenso wie der Zulaufleitungsabschnitt 4a, berührungsfrei über eine Behälteröffnung 1o aus dem oberen Bodenbereich des Meßbehälters 1 herausgeführt.

Meßeinrichtungen zur gravimetrischen Massenbestimmung im Sinne der erfindungsgemäßen Anordnung erfassen die Gewichtskraft der jeweils zu bestimmenden Masse. Deshalb wird in diesem Zusammenhang von Kräfte messender Einrichtung gesprochen. Im einfachsten Fall kann dies eine Federwaage sein. Moderne, hochempfindliche und sehr genaue Meßeinrichtungen arbeiten mit sogenannten Dehnungsmeßstreifen, die ein der Gewichtskraft proportionales, auswertbares Signal liefern. Als Kräfte messende Einrichtungen sollen jedoch auch solche Einrichtunge verstanden werden, die nach dem Prinzip des unmittelbaren Massenvergleichs arbeiten.

Im einfachsten Fall ist dies eine Balkenwaage, mit der ein direkter Massenvergleich möglich ist und mit der die zu bestimmende Masse, unabhängig von dem sich geringfügig ändernden Ortsfaktor (Erdbeschleunigung), exakt meßbar ist.

## Patentansprüche

1. Anordnung zur Überführung, Massenbestimmung und -abgrenzung von Flüssigkeiten, insbesondere für Getränke wie Milch oder Bier, wobei die Flüssigkeit aus wenigstens einem ersten Behälter in wenigstens einen zweiten Behälter überführt und dabei zum Zwecke einer gravimetrischen Massenbestimmung und -abgrenzung zunächst in einen dem zweiten Behälter vorgeschalteten Meßbehälter gefördert und dort mittels einer Kräfte messenden Einrichtung gewogen wird, mit einem Zulauf der Flüssigkeit zum und einem Ablauf der Flüssigkeit vom Meßbehälter, wodurch der Meßbehälter einerseits aus dem ersten Behälter befüllbar bzw. andererseits in den zweiten Behälter entleerbar ist, mit Fördereinrichtungen zur Erzeugung von im Zulauf und im Ablauf zum Transport der Flüssigkeiten notwendigen Druckdifferenzen und mit einer Abstützung des Meßbehälters auf einer Stützfläche, die parallel zur Wirkungslinie der die Kräfte messende Einrichtung beaufschlagenden Gewichtskraftkomponente des Meßbehälters verläuft, und gegenüber der der Meßbehälter nur in Richtung seiner meßbaren Gewichtskraftkomponente einen Verschiebefreiheitsgrad aufweist, wobei die gemessene Gewichtskraftkomponente unter Berücksichtigung eines gegenüber der Senkrechten gemessenen Neigungswinkels der Stützfläche mittels einer Auswerteeinrichtung zur Bestimmung der tatsächlichen Gewichtskraft herangezogen und der Neigungswinkel über eine Meßeinrichtung erfaßt wird, dadurch gekennzeichnet, daß ein Zulaufleitungsabschnitt (4a) für den Zulauf zum Meßbehälter (1) in diesen berührungsfrei hineingeführt oder an diesen anschließbar ist, und daß ein Ablaufleitungsabschnitt (5a) für den Ablauf vom Meßbehälter (1) aus diesem berührungsfrei herausgeführt oder von diesem berührungsfrei fortgeführt oder an diesen anschließbar ist, und daß gleichzeitig mit einer Überführung des Meßbehälters (1) in eine die Kräfte messende Einrichtung (18) mit der Gewichtskraft belastende Position der Zulaufleitungsabschnitt (4a) und/oder der Ablaufleitungsabschnitt (5a) vom Meßbehälter getrennt werden bzw. wird.

2. Anordnung nach Anspruch 1, dadurch gekennzeichnet, daß der Zulaufleitungsabschnitt (4a) aus einem ersten Speicherbehälter (4b) ausmündet, und der Ablaufleitungsabschnitt (5a) in einen zweiten Speicherbehälter (5b) einmündet.

3. Anordnung nach Anspruch 1 oder 2, dadurch gekennzeichnet, daß eine sich auf der Stützfläche (21) unmittelbar oder mittelbar abstützende Hubeinrichtung (43) entweder über die Kräfte messende Einrichtung (18) oder unmittelbar am Meßbehälter (1) angreift.

4. Anordnung nach einem der Ansprüche 1 bis 3, dadurch gekennzeichnet, daß der Verschiebefreiheitsgrad des Meßbehälters (1) durch Lagerungen auf der Stützfläche (21) erreicht wird, die in Richtung der Verschiebung weitestgehend kraftwirkungsfrei arbeiten und den Meßbehälter in anderen Richtungen starr begrenzen.

5. Anordnung nach einem der Ansprüche 1 bis 4, dadurch gekennzeichnet, daß in dem Meßbehälter (1) wenigstens ein Schwallblech (1l) vorgesehen ist, das in der Meßbehälter-Längsachse orientiert ist.

6. Anordnung nach Anspruch 5, dadurch gekennzeichnet, daß das Schwallblech (1l) radial zum Zentrum des Meßbehälters (1) ausgerichtet ist.

7. Anordnung nach Anspruch 6, dadurch gekennzeichnet, daß mehrere Schwallbleche (1l) einerseits jeweils am Mantel des Meßbehälters (1) angreifen und andererseits im Zentrum des Meßbehälters miteinander verbunden sind und daß sich Vorkehrungen zur radialen Fixierung (44) in der radialen Richtung der Schwallbleche (1l) und in deren Fortsetzung nach außen orientieren.

8. Anordnung nach einem der Ansprüche 1 bis 7, dadurch gekennzeichnet, daß die Stützfläche (21) als Rahmen ausgebildet ist.

9. Anordnung nach Anspruch 8, dadurch gekennzeichnet, daß der Rahmen (21) mit der gesamten Anordnung bzw. einem Fahrgestell (33) im wesentlichen ohne eigene Bewegungsfreiheitsgrade verbunden ist.

10. Anordnung nach Anspruch 8 oder 9, dadurch gekennzeichnet, daß der Rahmen (21) über Feder-/Dämpfungs-Elemente (33) in der gesamten Anordnung bzw. auf dem Fahrgestell (34) gelagert ist.

11. Anordnung nach Anspruch 10, dadurch gekennzeichnet, daß die Feder-/Dämpfungs-Elemente (33) derart angeordnet sind, daß der Schwerpunkt des zu dämpfenden Rahmens (21) mit allen seinen Bestandteilen in einer durch die Feder-/Dämpfungs-Elemente hindurchgelegt gedachten Ebene liegt.

12. Anordnung nach einem der Ansprüche 1 bis 11, dadurch gekennzeichnet, daß der Zulaufleitungsabschnitt (4a) und der Ablaufleitungsabschnitt (5a) jeweils über eine Kupplung (45 ; 46) an den Meßbehälter (1) angeschlossen sind.

13. Anordnung nach einem der Ansprüche 1 bis 11, dadurch gekennzeichnet, daß der Zulaufleitungsabschnitt (4a) über eine Behälteröffnung (1o) in den Meßbehälter (1) berührungsfrei hineingeführt und der Ablaufleitungsabschnitt (5a) über eine Kupplung (45 ; 46) an den Meßbehälter (1) anschließbar ist.

14. Anordnung nach einem der Ansprüche 1 bis 11, dadurch gekennzeichnet, daß der Zulaufleitungsabschnitt (4a) über eine Behälteröffnung (1o) in den Meßbehälter (1) berührungsfrei hineingeführt und der Ablaufleitungsabschnitt (5a) entweder von dem Meßbehälter (1) berührungsfrei mittels eines Auffanggefäßes (47) fortgeführt oder aus dem Meßbehälter (1) berührungsfrei herausgeführt ist.

15. Verfahren zur Überführung, Massenbestimmung und -abgrenzung von Flüssigkeiten mittels einer Anordnung nach einem der Ansprüche 1 bis 14, dadurch gekennzeichnet, daß mit der zu überführenden Flüssigkeit ein mit wenigstens zwei Meßbehältern (1, 2 bzw. 3) ausgestattetes Meßsystem quasikontinuierlich beschickt wird, indem Meßbehälter (1, 2 bzw. 3) wechselweise bzw. in zyklischer Reihenfolge befüllt und entleert oder teilentleert werden, und die Masse des befüllten und entleerten oder teilentleerten Meßbehälters (1, 2 bzw. 3) bestimmt wird.

16. Verfahren zur Überführung, Massenbestimmung und -abgrenzung von Flüssigkeiten mittels einer Anordnung nach einem der Ansprüche 2 bis 14, dadurch gekennzeichnet, daß mit der zu überführenden Flüssigkeit ein mit einem Meßbehälter (1) ausgestattetes Meßsystem beschickt wird, wobei die Flüssigkeit kontinuierlich in den ersten Speicherbehälter (4b) gefördert und kontinuierlich aus dem zweiten Speicherbehälter (5b) abgefördert wird, und daß die Masse des befüllten und des entleerten oder teilentleerten Meßbehälters (1) bestimmt wird.

17. Verfahren nach Anspruch 15 oder 16, dadurch gekennzeichnet, daß die in der ersten Fördereinrichtung (16), dem nachgeordneten Zulaufleitungsabschnitt (4a bzw. 4b, 4a) und den Meßbehältern (1 ; 2 ; 3) verbliebenen Restmengen eines Lieferanten kraftwirkungsfrei über absperrbare Entleerungsleitungen (54, 54a) in einen am Meßbehälter (1 oder 2 oder 3) angeordneten Auffangbehälter (53) entleert werden, daß die in den Auffangbehälter (53) überführte Restmenge beim nachfolgenden Lieferanten verwogen und kraftwirkungsfrei über eine absperrbare Ablaufleitung (55) in den Ablaufleitungsabschnitt (5a) überführt wird.

18. Verfahren nach Anspruch 17, dadurch gekennzeichnet, daß aus jedem verwogenen Meßbehälter (1 ; 2 ; 3) eine der Füllmenge und den Inhaltsstoffen repräsentative Teilmenge entnommen und in einen Probenvorlaufbehälter (59) überführt wird, daß die Teilmengen dort gestapelt und miteinander vermischt werden, und daß aus der Gesamtmenge im Probenvorlaufbehälter (59) eine Probenmenge in ein Probengefäß (61) abgefüllt und die verbleibende Restmenge in den Ablaufleitungsabschnitt (5a) entleert wird.

## Claims

1. Assembly for the transfer, mass determination and demarcation of fluent material, especially for beverages such as milk or beer, in which the liquid is transferred from at least one first vessel to at least one second vessel and thereby is first advanced to a metering vessel connected upstream of the second vessel for the purpose of gravimetric mass determination and demarcation and is weighed in said metering vessel by means of a force-measuring device, comprising an inlet for the liquid to and an outlet for the liquid from the metering vessel, allowing on the one hand the metering vessel to be filled from the first vessel and on the other hand to be emptied into the second vessel, an advancing device for generating the pressure differences necessary for advancing the liquid in the inlet and in the outlet and a support of the metering vessel on a supporting surface disposed in parallel to the line of action of the weight force component of the metering vessel acting upon the device for measuring the forces, the metering vessel having a degree of freedom of displacement relative to said supporting surface only in the direction of its measurable weight force component, the measured weight force component being used, considering an angle of inclination of the supporting surface measured against the vertical by means of an evaluation means, for determining the actual weight force and the angle of inclination being detected by means of a measuring means, characterized in that an inlet conduit section (4a) for the inlet to the metering vessel (1) leads into same without contacting same or can be attached thereto, and that an outlet conduit section (5a) for the outlet from the metering vessel (1) leads out therefrom without contacting same or is lead away from said outlet conduit section (5a) without contacting same or can be attached thereto, and that, simultaneously with a transfer of the metering vessel (1) into a position in which the device (18) for measuring the forces is loaded with a weight force, the inlet conduit section (4a) and/or the outlet conduit.section (5a) is or are separated from the metering vessel.

2. Assembly according to claim 1, characterized in that the inlet conduit section (4a) discharges from a first storage vessel (4b), and the outlet conduit section (5a) opens into a second storage vessel (5b).

3. Assembly according to claim 1 or 2, characterized in that a lifting means (43) which is supported directly or indirectly by the supporting surface (21) either acts via the force-measuring device (18) or directly upon the metering vessel (1).

4. Assembly according to one of claims 1 to 3, characterized in that the degree of freedom of displacement of the metering vessel (1) is achieved by bearings on the supporting surface (21) which act in the direction of the displacement to the largest extent without the action of force and rigidly delimit the metering vessel in other directions.

5. Assembly according to one of claims 1 to 4, characterized in that in the metering vessel (1) there is provided at least one baffle plate (1l) which is oriented in the longitudinal axis of the metering vessel.

6. Assembly according to claim 5, characterized in that the baffle plate (1l) is aligned radially to the center of the metering vessel (1).

7. Assembly according to claim 6, characterized in that a plurality of baffle plates (1l) on the one hand engage the casing of the metering vessel (1) and on the other hand are connected to one another in the center of the metering vessel, and that means for the radial fixation (44) are orientated in the radial direction of the baffle plates (1l) and in their extensions to the outside.

8. Assembly according to one of claims 1 to 7, characterized in that the supporting surface (21) is a frame.

9. Assembly according to claim 8, characterized in that the frame (21) is connected with the entire assembly or with an undercarriage (34) substantially without any degrees of freedom of movement of its own.

10. Assembly according to claim 8 or 9, characterized in that the frame (21) is journalled via spring/stabilizer elements (33) in the total assembly or on the undercarriage (34).

11. Assembly according to claim 10, characterized in that the spring/stabilizer elements (33) are disposed such that the center of gravity of the frame (21) to be stabilized is positioned with all its components on an imaginary plane through the spring/stabilizer elements.

12. Assembly according to one of claims 1 to 11, characterized in that the inlet conduit section (4a) and the outlet conduit section (5a) are each attached to the metering vessel (1) via a coupling (45 ; 46).

13. Assembly according to one of claims 1 to 11, characterized in that the inlet conduit section (4a) can be introduced, without contacting same, into the metering vessel (1) via a vessel aperture (10) and the outlet conduit section (5a) can be attached to the metering vessel (1) via a coupling (45 ; 46).

14. Assembly according to one of claims 1 to 11, characterized in that the inlet conduit section (4a) is led into the metering vessel (1) via a vessel aperture (10) without contacting same and the outlet conduit section (5a) either leads away from the metering vessel (1) by means of a collection vessel (47) without contacting

EP 0 297 329 B1

same or is lead out of the metering vessel (1) without contacting same.

15. Process for the transfer, mass determination and demarcation of fluent materials by means of an assembly according to one of claims 1 to 14, characterized in that a measuring system equipped with at least two metering vessels (1, 2 or 3) is quasi-continuously charged with the liquid to be transferred, in that metering vessels (1, 2 or 3) are filled or emptied or partially emptied alternatively or in cyclical sequence, and that the mass of the filled or emptied or partially emptied metering vessel (1, 2 or 3) is determined.

16. Process for the transfer, mass determination and demarcation of fluent materials by means of an assembly according to one of claims 2 to 14, characterized in that a measuring system equipped with a metering vessel (1) is charged with the liquid to be transferred, the liquid being continuously advanced to the first storage vessel (4b) and continuously removed from the second storage vessel (5b), and that the mass of the filled and the emptied or partially emptied metering vessel (1) is determined.

17. Process according to claim 15 or 16, characterized in that the residual quantities from one supplier still contained in the first advancing means (16), the downstream arranged inlet conduit section (4a or 4b, respectively, 4a) and the metering vessels (1 ; 2 ; 3) are emptied without action of force via a lockable discharge conduits (54, 54a) into a collection vessel (53) arranged at the metering vessel (1 or 2 or 3), that the residual quantity transferred to the collection vessel (53) is weighed at the place of the subsequent supplier and is transferred without action of force into the outlet conduit section (5a) via a lockable discharge conduit (55).

18. Process according to claim 17, characterized in that from each weighed metering vessel (1 ; 2 ; 3) there is removed a partial quantity representative for the quantity filled in and the substances contained therein and is transferred into a preliminary sampling vessel (59), that the partial quantities are stacked and mixed there, and that from the total quantity in the preliminary sampling vessel (59) a sample quantity is filled into a sample vessel (61) and the remaining residual quantity is emptied into the outlet conduit section (5a).

## Revendications

1. Arrangement pour reprise, détermination et limitation de masses de liquides, notamment pour boissons comme le lait et la bière, étant entendu que le liquide est envoyé d'au moins un premier récipient dans au moins un deuxième récipient, et que pour la détermination gravimétrique des masses et pour la limitation de celles-ci, il est d'abord transféré dans un récipient de mesure branché en amont du deuxième récipient et y est pesé au moyen d'une installation de mesure de forces, arrangement comportant une arrivée du liquide vers le récipient de mesure et une sortie du liquide à partir de ce récipient, par lesquelles on peut, d'une part, remplir le récipient de mesure à partir du premier récipient et, d'autre part, le vider dans le deuxième récipient, comportant des dispositifs de transfert réalisant les différences de pression nécessaires, dans l'arrivée et la sortie, pour faire circuler les liquides, et comportant un appui du récipient de mesure sur une surface d'appui qui est disposée parallèlement à la ligne d'action de la composante de la force de gravité du récipient de mesure agissant sur l'installation de mesure des forces, et par rapport à laquelle le récipient de mesure présente un degré de liberté en translation seulement dans la direction de sa composante mesurable de la force de gravité, étant entendu que la composante mesurée de la force de gravité est évaluée par détermination d'un angle d'inclinaison de la surface d'appui, mesuré par rapport à la verticale, au moyen d'un dispositif d'interprétation déterminant la force de gravité réelle, et que l'angle d'inclinaison est déterminé au moyen d'un dispositif de mesure, caractérisé en ce qu'un élément de conduite d'arrivée (4a) pour l'arrivée au récipient de mesure (1) pénètre dans celui-ci sans le toucher, ou peut être raccordé à celui-ci, et en ce qu'un élément de conduite de sortie (5a) pour la sortie du récipient de mesure (1) sort de celui-ci sans le toucher, ou peut être raccordé à celui-ci, et en ce qu'en même temps, que le passage du récipient de mesure (1) dans une installation (18) de mesure des forces, en une position prenant en charge la force de gravité, l'élément de conduite d'arrivée (4a) et/ou l'élément de conduite de sortie (5a) peut, ou peuvent, être séparé(s) du récipient de mesure.

2. Arrangement suivant la revendication 1, caractérisé en ce que l'élément de conduite d'arrivée (4a) débouche d'un premier réservoir de stockage (4b) et que l'élément de conduite de sortie (5a) débouche dans un deuxième réservoir de stockage (5b).

3. Arrangement suivant la revendication 1 ou la revendication 2, caractérisé en ce qu'un dispositif de levage (43), s'appuyant directement ou indirectement sur la surface d'appui (21), agit sur le récipient de mesure (1) soit par l'intermédiaire d'un dispositif (18) de mesure des forces, soit directement.

4. Arrangement suivant l'une quelconque des revendications 1 à 3, caractérisé en ce que le degré de liberté en translation du récipient de mesure (1) est obtenu par des paliers sur la surface d'appui (21), paliers qui travaillent dans la direction de translation avec la course la plus longue possible et qui limitent de façon rigide les déplacements du récipient de mesure dans les autres directions.

5. Arrangement suivant l'une quelconque des revendications 1 à 4, caractérisé en ce que, dans le récipient

12

de mesure (1), il est prévu au moins une tôle brise-jet (1I), orientée suivant l'axe longitudinal du récipient de mesure.

6. Arrangement suivant la revendication 5, caractérisé en ce que la tôle brise-jet (1I) est disposée radialement vers le centre du récipient de mesure (1).

7. Arrangement suivant la revendication 6, caractérisé en ce que plusieurs tôles brise-jet (1I) sont, d'un côté, fixées chacune sur la paroi externe du récipient de mesure (1) et, de l'autre côté, sont raccordées ensemble au centre du récipient de mesure, et en ce que des pièces de renvoi pour fixation radiale (44) sont orientées suivant la direction radiale des tôles brise-jet (1I) et les prolongent vers l'extérieur.

8. Arrangement suivant l'une quelconque des revendications 1 à 7, caractérisé en ce que la surface d'appui (21) est réalisée en formant cadre.

9. Arrangement suivant la revendication 8, caractérisé en ce que le cadre (21) est raccordé avec l'ensemble de l'arrangement, ou avec un châssis de transport (34), essentiellement sans présenter de degré propre de liberté de mouvement.

10. Arrangement suivant la revendication 8 ou la revendication 9, caractérisé en ce que le cadre (21) est monté dans l'ensemble de l'arrangement, ou sur le châssis de transport (34), par l'intermédiaire d'organes amortisseurs à ressort (33).

11. Arrangement suivant la revendication 10, caractérisé en ce que les organes amortisseurs à ressort (33) sont disposés de telle façon que le centre de gravité du cadre (21) à amortir, avec toutes ses parties constitutives, se trouve dans un plan prévu pour passer par les organes amortisseurs à ressort.

12. Arrangement suivant l'une quelconque des revendications 1 à 11, caractérisé en ce que l'élément de conduite d'arrivée (4a) et l'élément de conduite de sortie (5a) sont chacun raccordés au récipient de mesure (1) par l'intermédiaire d'un accouplement (45 ; 46).

13. Arrangement suivant l'une quelconque des revendications 1 à 11, caractérisé en ce que l'élément de conduite d'arrivée (4a) conduit à l'intérieur du récipient de mesure (1) par l'intermédiaire d'un orifice (10) du récipient, sans le toucher, et que l'élément de conduite de sortie (5a) peut être raccordé au récipient de mesure (1) par l'intermédiaire d'un accouplement (45 ; 46).

14. Arrangement suivant l'une quelconque des revendications 1 à 11, caractérisé en ce que l'élément de conduite d'arrivée (4a) conduit à l'intérieur du récipient de mesure (1) par l'intermédiaire d'un orifice (10) du récipient, sans le toucher, et que l'élément de conduite de sortie (5a) soit est situé dans le prolongement du récipient de mesure (1) sans le toucher, au moyen d'un réceptacle (47), soit conduit à l'extérieur du récipient de mesure (1) sans le toucher.

15. Procédé pour réaliser la reprise, la détermination et la limitation de masses de liquides au moyen d'un arrangement suivant l'une quelconque des revendications 1 à 14, caractérisé en ce qu'on alimente, de façon quasi continue, avec le liquide à transférer, un système de mesure constitué d'au moins deux récipients de mesure (1, 2 ou 3), étant entendu que l'on remplit et que l'on vide, totalement ou en partie, à tour de rôle ou suivant un cycle, les récipients de mesure (1, 2 ou 3) et que l'on détermine la masse du récipient de mesure (1, 2 ou 3) rempli, et celle du récipient de mesure (1, 2 ou 3) vidé totalement ou en partie.

16. Procédé pour réaliser la reprise, la détermination et la limitation de masses de liquides au moyen d'un arrangement suivant l'une quelconque des revendications 2 à 14, caractérisé en ce qu'on alimente avec un liquide à transférer un système de mesure comportant un récipient de mesure (1), le liquide étant amené en continu dans le premier réservoir de stockage (4b) et, en continu, retiré du deuxième réservoir de stockage (5b), et en ce que l'on détermine la masse du récipient de mesure (1) rempli et celle du récipient de mesure (1) vidé totalement ou en partie.

17. Procédé suivant la revendication 15 ou la revendication 16, caractérisé en ce que les quantités restantes d'une livraison, qui demeurent dans la première installation de transfert (16), dans l'élément de conduite d'arivée (4a ou 4b, 4a) qui lui fait suite et dans le récipient de mesure (1, 2, 3) sont vidées sans faire intervenir d'énergie, par l'intermédiaire de conduites de vidange (54, 54a) obturables, dans un réservoir collecteur (53) associé au récipient de mesure (1 ou 2 ou 3), en ce que, lors de la livraison suivante, la quantité restante envoyée dans le réservoir collecteur (53) est pesée et, sans faire intervenir d'énergie, est envoyée dans l'élément de conduite de sortie (5a) par l'intermédiaire d'une conduite d'écoulement (55).

18. Procédé suivant la revendication 17, caractérisé en ce qu'à partir de chaque récipient de mesure (1 ; 2 ; 3) pesé, une quantité partielle, représentative de la quantité entrée et des matières contenues, est prélevée et envoyée dans un récipient d'entrée des échantillons (59), en ce que les quantités partielles y sont stockées et mélangées entre elles, et en ce qu'à partir de la quantité totale dans le récipient d'entrée des échantillons (59), une quantité d'échantillonnage est déversée dans un récipient d'échantillonnage (61) et que la quantité restante est ément de conduite de sortie (5a).

Fig.1

Fig.2

Fig.3

Fig. 4

EP 0 297 329 B1

# Fig.5

21a   44; (1i,   )   18

E ▶

4a

39

1p

39

34

33   44; (1j,   )

21

1

5a

21b

A

K

# Fig.5a

46

4a

46

5a

# Fig.5b

4a

1o

46

5a

# Fig.5c

4a

1o

1m

47

5a

17

## Fig.6

## Fig.6a

## Fig.6b

## Fig.6c